# EUROPEAN PATENT SPECIFICATION

(11) **EP 3 857 025 B1**
(45) Date of publication and mention of the grant of the patent: **09.12.2026**
(21) Application number: 18855123.8
(22) Date of filing: 28.12.2018
(51) Int. Cl.: E21B 41/00, G01V 11/00

(54) **AUTOMATICALLY DETECTING AND CORRECTING ANOMALIES IN LOG DATA**
AUTOMATISCHE ERKENNUNG UND KORREKTUR VON ANOMALIEN IN PROTOKOLLDATEN
DÉTECTION ET CORRECTION AUTOMATIQUES D'ANOMALIES DANS DES DONNÉES DE DIAGRAPHIE

(30) Priority: 25.09.2018 US 201862736059 P; 23.10.2018 US 201862749345 P
(43) Date of publication of application: 04.08.2021
(73) Proprietor: GeoSoftware C.V., 3439 LM Nieuwegein (NL)
(72) Inventor: RANGANATHAN, Chiranjith, 91300 Massy (FR); JOHNSTON, Joe, 91300 Massy (FR); JENSON, Fred, 91300 Massy (FR)
(74) Representative: Ipsilon
(86) International application number: PCT/IB2018/001615
(87) International publication number: WO 2020/065365

(56) References cited:
- MITHILESH KUMAR ET AL: "Petrophysical evaluation of well log data and rock physics modeling for characterization of Eocene reservoir in Chandmari oil field of Assam-Arakan basin, India", JOURNAL OF PETROLEUM EXPLORATION AND PRODUCTION TECHNOLOGY, vol. 8, no. 2, 1 June 2018 (2018-06-01), pages 323 - 340, XP055593821, ISSN: 2190-0558, DOI: 10.1007/s13202-017-0373-8
- R. AKKURT ET AL.: "Accelerating and Enhancing Petrophysical Analysis with Machine Learning: A Case Study of An Automated System for Well Log Outlier Detection and Reconstruction", SOCIETY OF PETROPHYSICISTS AND WELL LOG ANALYSTS (SPWLA) 59TH ANNUAL LOGGING SYMPOSIUM, 2 June 2018 (2018-06-02), XP002791796
- P. M. WONG ET AL: "A Pattern Adaptive Technique to Handle Data Quality Variation", NEURAL PROCESSING LETTERS, vol. 10, no. 1, 1 August 1999 (1999-08-01), US, pages 7 - 15, XP055593785, ISSN: 1370-4621, DOI: 10.1023/A:1018602627915

## Description

### BACKGROUND

### TECHNICAL FIELD

Embodiments of the subject matter disclosed herein generally relate to methods and systems for geological exploration based on values of measurements acquired with logging tools and of properties calculated from the measurements along a borehole, and, in particular, to methods and systems for automatically detecting and correcting anomalies in the log data.

### DISCUSSION OF THE BACKGROUND

Probing underground formations in search of hydrocarbon resources is an ongoing process driven by continually increasing worldwide demand. Log data includes various measurements associated with positions along a drilled hole. The measurements include plural quantities such as gamma ray, spontaneous potential, hole dimensions, resistivity (shallow or deep), density, neutron porosity, sonic impedance, photoelectric, etc. Log data also includes petrophysical properties (such as shale volume, water saturation, porosity, permeability, elasticity, reflectivity coefficient, etc.) values are derived from the measurements. "Log" or "curve" are terms used for a set of values representing same feature measured or calculated at locations (depths) along a drilled hole. The term "borehole" is used while a hole is drilled in the Earth, and the term "well" is used when drilling has been completed and, for example, hydrocarbons or other minerals are extracted. However, in this document, the terms "borehole" and "well" may be used interchangeably.

Once log data becomes available, an accurate petrophysical analysis thereof includes detection and correction of anomalies. An anomaly in the recorded log data is a measurement or set of measurements that do not conform to the expected tool response in the borehole. This could be caused, for example, by enlarged borehole or erratic borehole wall shape (rugosity) and is a bad hole point. Note that presence of an anomaly is signaled by an outlier value.

In an attempt to accelerate the petrophysical analysis, outlier value detection has been automated as described in the article, "Accelerating and Enhancing Petrophysical Analysis with Machine Learning: A Case Study of An Automated System for Well Log Outlier Detection and Reconstruction," by R. Akkurt et al., presented at the Society of Petrophysicists and Well Log Analysts (SPWLA) 59th Annual Logging Symposium, June 2-6, 2018. The machine learning, ML, workflow set forth in this article includes: (1) exploratory data analysis, (2) outlier identification, (3) well grouping based on similarity, (4) reconstruction based on prediction and (5) quality assessment.

This first attempt has some weaknesses impacting the quality of the results, such as (but not limited to) the absence of reconstructing values for detected anomalies (i.e., replacing the outlier values), as well as patching curves at outlier depths and ignoring the outlier points in the similarity analysis. Additionally, Akkurt's approach employs only a few of the available logs.

Thus, there is a need to develop methods and systems that overcome the above-described drawbacks and limitations in automatic anomaly detection and correction of log data.

### SUMMARY

Methods and devices according to various embodiments provide automatic anomaly detection and correction for log data.

According to an embodiment there is a geological exploration method according to claim 1 that includes obtaining measurements and calculating property values along boreholes in an area of interest to generate log data including plural curves, detecting anomalies along at least one curve of one of the boreholes, and training a machine learning regressor using one or more curves without anomaly values of the one of the boreholes and/or of another similar borehole among the boreholes, to predict a synthetic curve corresponding to the at least one curve. The method further includes blending the synthetic curve into the at least one curve. Here, a curve is a set of measurements or calculated property values associated with depth values.

According to another embodiment there is an underground exploration apparatus according to claim 14 having an interface configured to obtain measurements and calculating property values along boreholes in an area of interest to generate log data including plural curves and a data processing module connected to the interface, including at least one processor. The data processing module is configured to detect anomalies along at least one curve of one of the boreholes, to train a machine learning regressor using one or more curves without anomaly values of the one of the boreholes and/or of another similar borehole among the boreholes, to predict a synthetic curve corresponding to the at least one curve, and to blend the synthetic curve into the at least one curve.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic illustration of a workflow for anomaly detection and correction according to an embodiment;
Figure 2 illustrates implementations of anomaly detection, according to some embodiments;
Figure 3 is a graph illustrating elbow-plot variance method for automatic parameter determination;
Figure 4 shows outliers and inliers identified using the results in Figure 3;
Figure 5 illustrates an implementation of the step of associating an anomaly flag to each depth according to an embodiment;
Figure 6 illustrates an embodiment of borehole grouping;
Figure 7 is an example of similarity analysis;
Figure 8 illustrates implementations of depth-blending;
Figures 9A and 9B are neutron porosity versus bulk density cross-plot for a borehole using the original curves' values and the blended curves' values respectively;
Figure 10 is a log-plot example representing an anomaly flag, original density and neutron porosity curves, blended density and neutron porosity curves, and synthetic density and neutron porosity curves for a borehole;
Figure 11 is another log-plot example;
Figure 12 is a schematic diagram of a log-data processing apparatus according to an embodiment; and
Figure 13 is a flowchart of a geological exploration method according to an embodiment.

### DETAILED DESCRIPTION

The following description of the exemplary embodiments refers to the accompanying drawings. The same reference numbers in different drawings identify the same or similar elements. The following detailed description does not limit the invention. Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places is not necessarily referring to the same embodiment. Further, the particular features, structures or characteristics may be combined in any suitable manner in one or more embodiments.

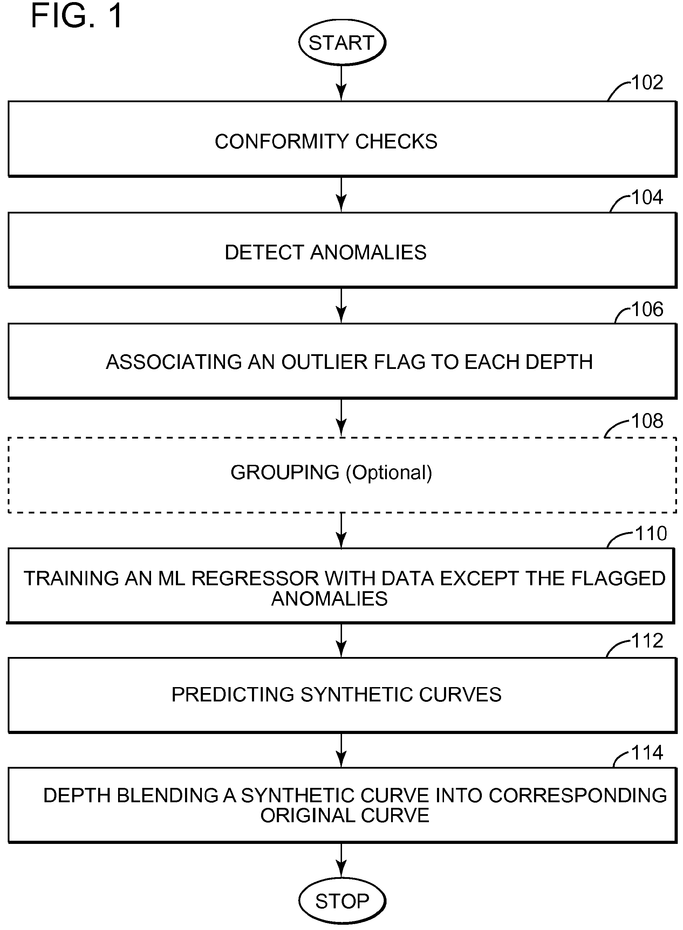

Figure 1 is a schematic illustration of a workflow for anomaly detection and correction according to an embodiment. Outliers are observations that deviate from an overall pattern. In the process of producing, collecting, processing and analyzing data, outliers may be due to errors. Outliers that are not a product of an error are sometimes called "novelties."

The workflow illustrated in Figure 1 starts with a conformity check at 102. This conformity check includes verifying that the basic logs (resistivity, density, neutron, gamma ray, etc.) exist, depth-shifting so that each log is at the same depth relative to the other logs of the same borehole, normalizing the log(s) so that the response range of one log in a borehole is similar to the same log in other boreholes, applying environmental corrections for temperature, borehole conditions, etc., if needed.

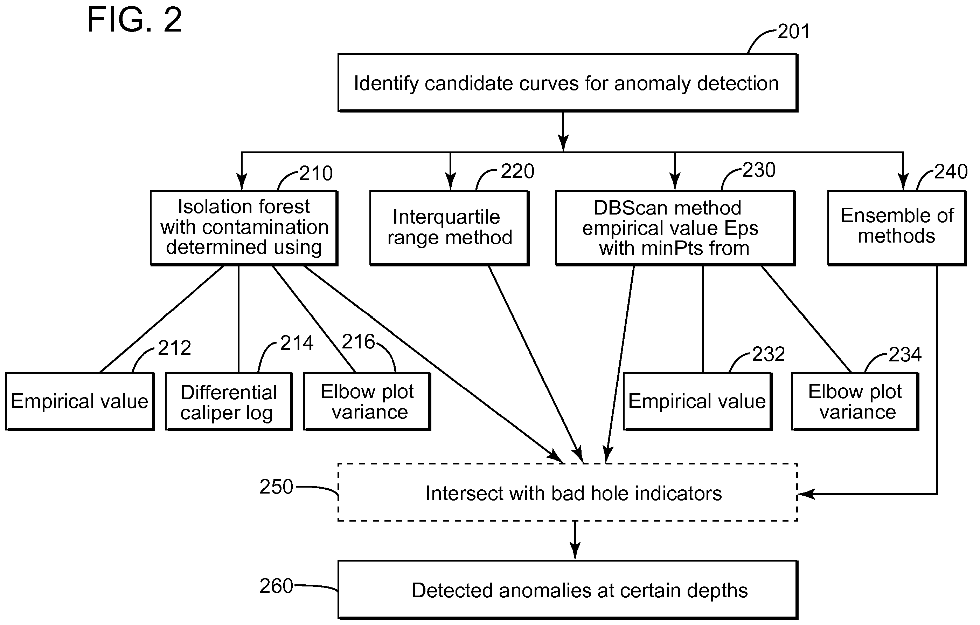

Then, at 104, the depths at which anomalies occur are identified. In order to perform this step, candidate curves for anomaly detection and correction are selected first. For example, density, neutron and sonic curve may be selected as they are the most sensitive to anomalous responses. Anomaly detection may be performed using an isolation forest method and/or a density-based clustering method (DBScan) described later in this document and illustrated in Figure 2. Using the Anomaly detection ensemble is preferred as ensembles are more reliable than a single algorithm's results. Uncorrected neutron porosity and density curves are used in one embodiment. Differential caliper log or first derivative of caliper log may also be employed. Caliper log is a series of measurements of the borehole's diameter and shape. The caliper is a tool with 2, 4 or more (up to 30) expandable arms that measures the borehole's geometry.

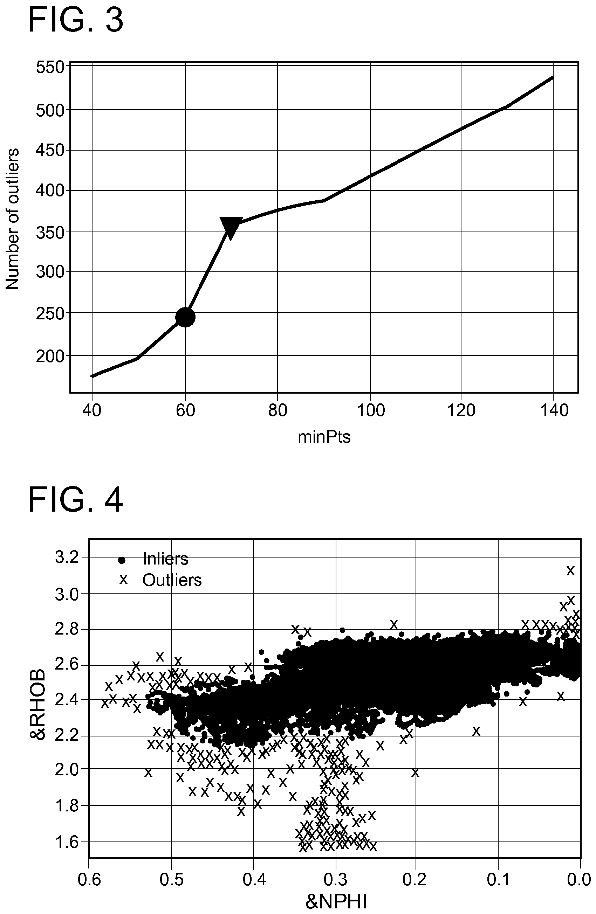

At 106, the anomaly detection's results are converted into a flag log associating an anomaly flag value to each depth. Anomaly flag values could be 0 or 1 and they may be associated with a log of the same quantity in each borehole that was analyzed for anomalies. An embodiment of this step is described later in this document and illustrated in Figure 3.

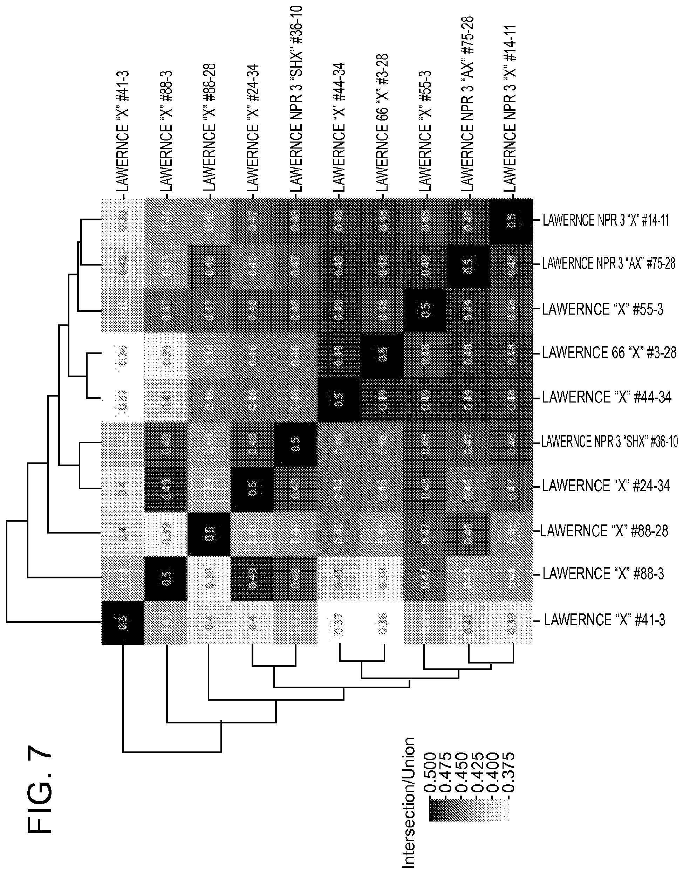

Then, at 108, grouping based on well similarity analysis is performed to visualize results on a hierarchical cluster from a confusion matrix (see, e.g., Figure 7) showing the different similarity scores. Wells with high similarity scores are grouped together. An embodiment of this step is described later in this document and illustrated in Figure 4.

Training a machine learning, ML, regressor with data from inlier depths of (similar wells) leaving out anomalies is then performed at 110. Logs that are less affected by bad values (for example, gamma ray, sonic, resistivity) are used for training, which is then used to predict logs that require corrections such as neutron porosity, density. The ML regressor could be a neural network, a multilinear regressor, a support vector machine, a random forest regressor or a gradient boosting regressor.

At 112, synthetic curves are then predicted using the trained ML regressor for neutron porosity, density and other logs that require correction, from the trained data across all depths on the same group of boreholes.

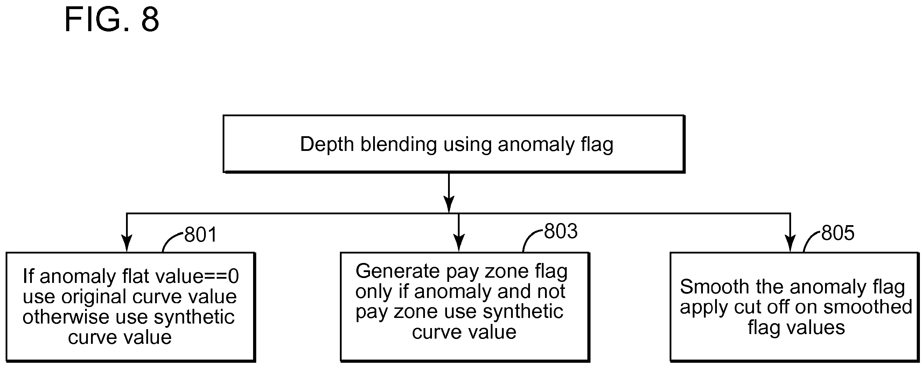

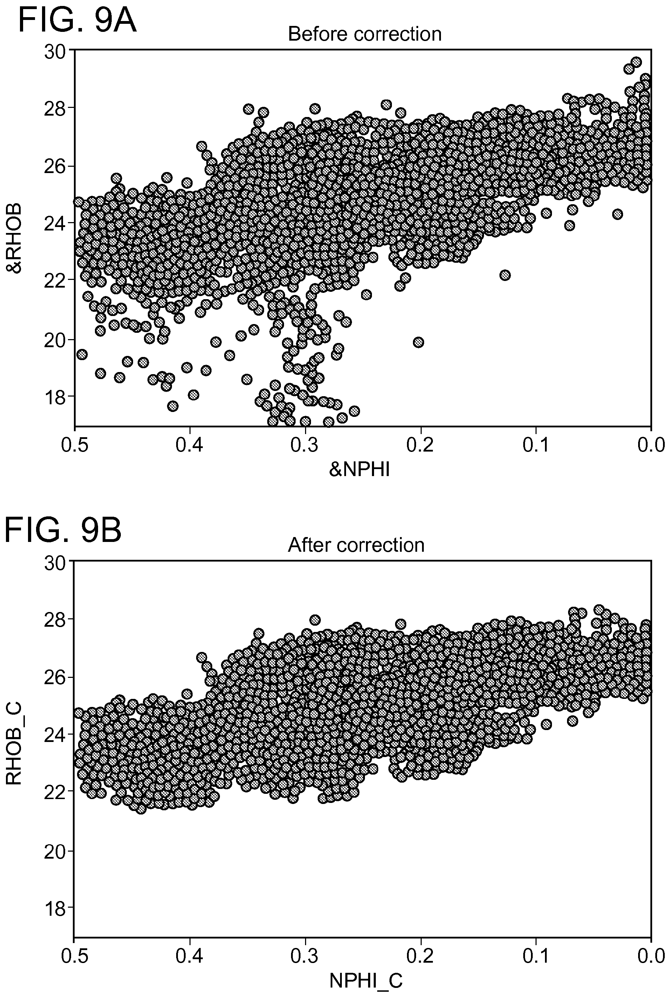

Then, at 114, depth-blending is performed for each log that requires correction and had a synthetic log generated at 112. For example, the synthetic curve is blended into the original curve by replacing original values at depths flagged as anomalies with synthetic curve values. Other blending techniques are presented in Figure 8. Figures 9A and 9B illustrate neutron porosity versus density log values before and after applying corrections.

Figures 2 details alternative implementations of anomaly detection (i.e., step 104 in Figure 1) according to some embodiments. First, at 201, logs to be used for anomaly detection are selected. For example, in one embodiment, neutron porosity and bulk density are used. Other embodiments may use combinations of any basic logs (including caliper or differential caliper).

Then, an isolation forest algorithm 203 or a density-based spatial clustering algorithm (DBScan) 211 may be used to detect the anomalies. The anomaly detection methods can be executed independently and combined as an ensemble. The outcome of a method in the ensemble or the outcome of a combination of methods may then be used. Additionally, an interquartile range (IQR) fencing based outlier detection may be applied on a bad hole indicator log like differential caliper or bulk density as a part of the ensemble.

Isolation forest is an effective method for detecting outliers in data based on binary decision trees. The premise is that outliers are few and far from the rest of the observations. To build a tree (training), the algorithm randomly picks a feature from the feature space and a random split value ranging between the feature's maximum and minimum values. This is performed for all the observations in the training set. To build the forest, a tree ensemble is made by averaging all the trees in the forest. Then for prediction, an observation is compared with the splitting value in a "node", yielding two node children on which another random comparison is made. The number of "splittings" made by the algorithm for an instance is named "path length." As expected, outliers have shorter path lengths than the other observations.

An outlier score *s(x,n)* computed for each observation is a function of the path length x of the sample and the number *n* of external nodes. After calculating a score ranging from 0 to 1 (1 meaning more outlyingness and 0 meaning more normality) for each observation, the score is compared with a threshold known as "contamination."

The isolation forest algorithm requires a value for contamination at 203. There are three options to estimate contamination. A first option 205 is to use an empirical value such as 0.1. A second option 207 calculates an upper and a lower fence of the differential caliper log, and then determines contamination as the percentage of points outside the upper and the lower fence. For example, upper fence = p75 + 1.5 x IQR and lower fence = p25 - 1.5 x IQR, where IQR is interquartile range, which is typically p75-p25, p75 being the 75^{th} percentile and p25 being the 25^{th} percentile. Alternatively or additionally, a caliper derivative or log quantity such as bulk density or density correction may be used as these are also sensitive to bad hole effects.

A third option 209 automatically calculates an ideal contamination value using an elbow-plot variance method applied to a plot of number of points marked as anomalies versus contamination (similar to the plot illustrated in Figure 3 but with contamination values on x-axis). The contamination value is varied, for example, within a range of 0.05 to 0.3 at a step example 0.01 or 0.02, and the number of points marked as anomalies for each contamination value is recorded. The contamination value which has the highest variance or rate of change of the number points marked as anomalies is chosen as the ideal contamination value. This value can be adjusted (e.g., increased or decreased one or a few steps) to achieve best results.

Alternatively or additionally to using isolation forest, a density-based spatial clustering method (DBScan) may also be employed as suggested by the box labeled 211. DBscan is focused on finding neighbors by density (MinPts) on an 'n-dimensional sphere' with radius eps. A cluster can be defined as the maximal set of 'density connected points' in the feature space. In DBscan, a data point is a core point if its neighborhood (defined by eps) contains at least the same number or more points than the parameter minPts, a border point is still 'density reachable' (or 'density connected') by other points in the cluster as it lies in a cluster, but its neighborhood does not contain more points than minPts, and an outlier is a point that lies in no cluster and is not 'density reachable' by any other point (in other words, an outlier is alone in its own cluster). Thus, eps is the maximum distance between two given samples to consider them neighbors, and minPts is the number of surrounding samples for a given point to be considered a core point.

As indicated at 213, an empirical value may be used for eps. Then, one option 217 is to use an empirical value for minPts. Another option 215 is to use an automatic elbow-plot variance method (see Figure 3). The minPts is varied within a range example: 50 to 300 (the range may be an empirical percentage of total number of depths) at a step of 5 or 10. The number of points marked as anomalies for each minPts value is recorded. The value of minPts which has the highest variance or rate of change of the number of points marked as anomalies is chosen as the ideal value. This minPts value can be adjusted by increasing or decreasing it with one step to achieve best results. The elbow occurs because at a certain minPts value, the algorithm is no longer just marking outliers but marking entire clusters as outliers. This transition point can thus be automatically identified and it is used as the ideal value for minPts for that borehole log.

An ensemble technique 221 may be employed to combine (as an intersection or a union) anomaly detection results obtained with the isolation forest and the ones obtained using DBScan. Additionally, the results of an interquartile range (IQR) fencing on one of the bad hole indicator logs such as differential caliper or bulk density could be intersected to the results of anomaly detection at 223. The output is the detected anomalies 215.

As already mentioned, Figure 3 is a graph illustrating variance-based automatic minPts ideal value determination. Figure 4 shows marked outliers (lighter circles) identified using the results shown in Figure 3 with DBScan and inliers (darker circles).

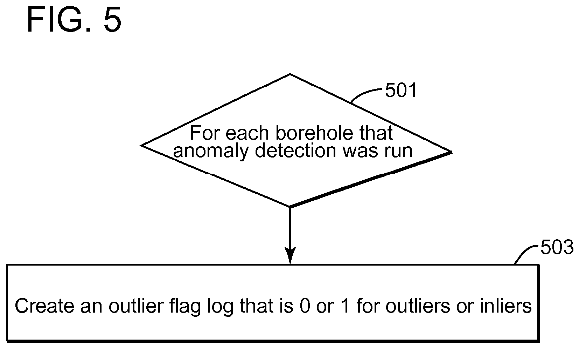

Figure 5 illustrates an implementation of associating an anomaly flag to each depth (i.e., step 106 in Figure 1). While looping over all boreholes on which anomaly detection was run at 501, a flag value is associated with each depth at 503. The flag can have value 0 or 1 (depending on whether an anomaly was detected at the depth or not), and the values constitute a log for the analyzed borehole.

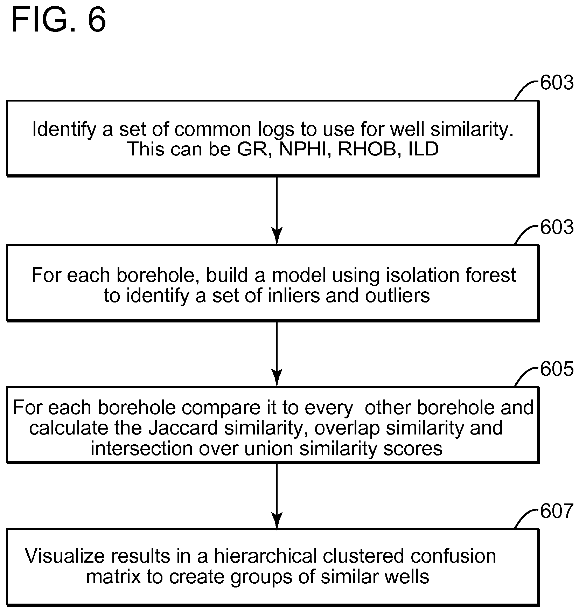

Figure 6 illustrates an embodiment of the borehole grouping (i.e., step 108 in Figure 1). At 601, a set of common logs to be used for determining well similarity are selected. For example, the set may include Gamma Ray (GR), Neutron Porosity (NPHI), Bulk Density (RHOB), resistivity (e.g., Deep Induction ILD). It is recommended but not required to include logs that require correction.

At 603, a model is built for each borehole using the inliers established via an isolation forest method. Then, at 605, each borehole is compared to every other borehole to calculate the Jaccard similarity score, the overlap similarity score and/or the intersection-over-union score. Jaccard similarity score measures similarity for the two sets of data with a range from 0% to 100%; the higher the percentage, the more similar the two data sets. Overlap similarity score measures the overlap between two data sets being defined as the size of the intersection divided by the smaller of the size of the two sets. The intersection-over-union score is 0.5 when a data set is compared with itself. If the two data sets have the same size, the overlap score may also be expressed in terms of percentage.

In one embodiment, comparing two boreholes, Borehole1 and Borehole2, with model1 and model2, respectively, includes:
1. Pass the candidate log values of Borehole1 through model1 and model2 and, similarly, values of Borehole2 through model1 and model2 to determine points (depths) that are inliers in both wells, points that are inliers in Borehole1 alone, and points that are inliers in Borehole2 alone.
2. Use the above determination to calculate the Jaccard similarity score and/or the overlap similarity score.

Results are visualized in a hierarchical clustered confusion matrix at 607, thus, allowing quicker identification of similar wells to create groups. Figure 7 is an example of similarity analysis using the intersection-over-union score on a group of wells. The labels on the right side and bottom of the table identify wells in an area of interest. The connector lines on the top and left sides show the hierarchical grouping based on similarity.

Figure 8 illustrates implementations of depth-blending (i.e., step 114 of Figure 1). For each log that requires correction (i.e., includes anomalies), a synthetic curve is blended into the original curve by replacing the anomalies in the original curve with synthetic curve values. Various techniques (some of which are described below as options) using the anomaly flag may be used individually or combined to generate the blended curve (i.e., "selective" depth-blending). According to a first option 801, if the flag indicates anomaly then the synthetic value replaces the value in the original curve; otherwise, the original curve value is maintained. According to a second option 803, a pay zone flag ("res_outlier") is generated to avoid using synthetic values in the blended curves over pay zones. A pay zone is a portion of the reservoir that can contain hydrocarbons.

In one embodiment, the pay zone flag values are determined using the resistivity curve's interquartile range cut-off: the pay zone flag is 0 if the resistivity value at a depth is not within middle (25-75%) values, and 1 if the resistivity value is within the middle values. Then, if the anomaly flag is 0 and the pay zone flag is 1, the synthetic value replaces the value in the original curve; otherwise, the original curve value is maintained. The resistivity curve typically has spikes in pay zones and/or wet zones. This second option ensures the original value is preserved if there is a resistivity outlier. Other methods may be used to generate the pay zone flag values, such as using values for lowest gamma ray readings (which are assumed to correspond to potential reservoir/pay zones. The pay zone flag methods have in common that a pay zone's original curve is not overwritten with a synthetic curve.

According to a third option 805, the outlier flag is smoothed to avoid shoulder effects, and a cut-off on the smoothed flag is applied when blending. If the flag is less than the cut-off on the smoothed flag, then the synthetic value replaces the value in the original curve; otherwise, the original curve value is maintained. The cut-off on the smoothed flag may be, e.g., 0.98 or 0.95.

Figure 9A is a neutron porosity versus density cross-plot for a borehole using the original curves' values, and Figure 9B is a neutron porosity versus bulk density cross-plot for the same borehole using the blended curves' values.

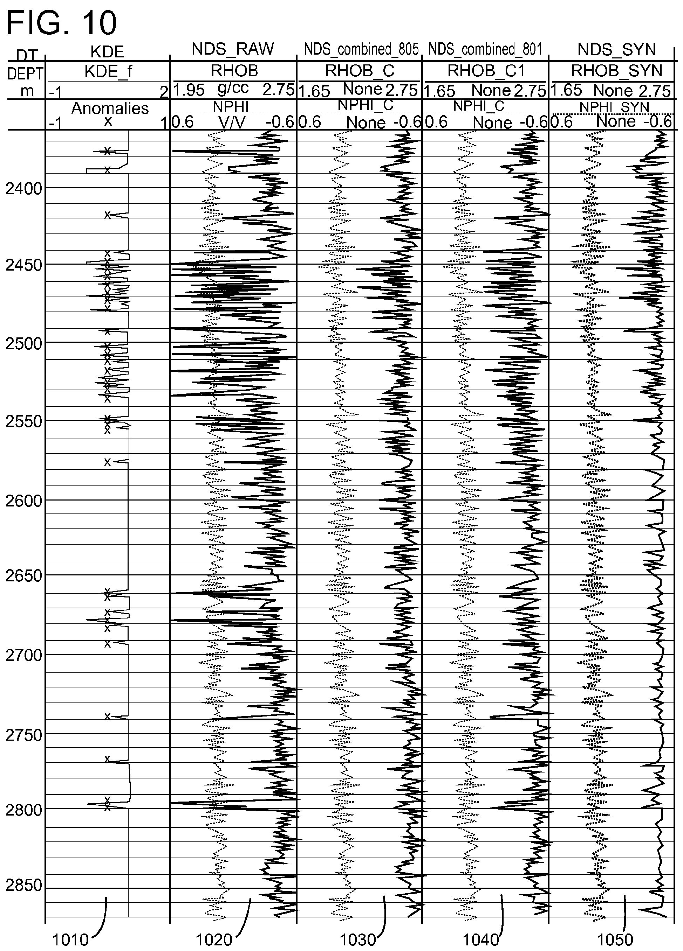

Figure 10 is a log plot with four sections (i.e., tracks having the same depth vertical coordinate). Section 1010 is the anomaly flag according to the outlier detection. Section 1020 represents the original density and neutron porosity curves. Section 1030 represents the blended logs obtained from the values of original and synthetic curves. Section 1040 represents the synthetic curves.

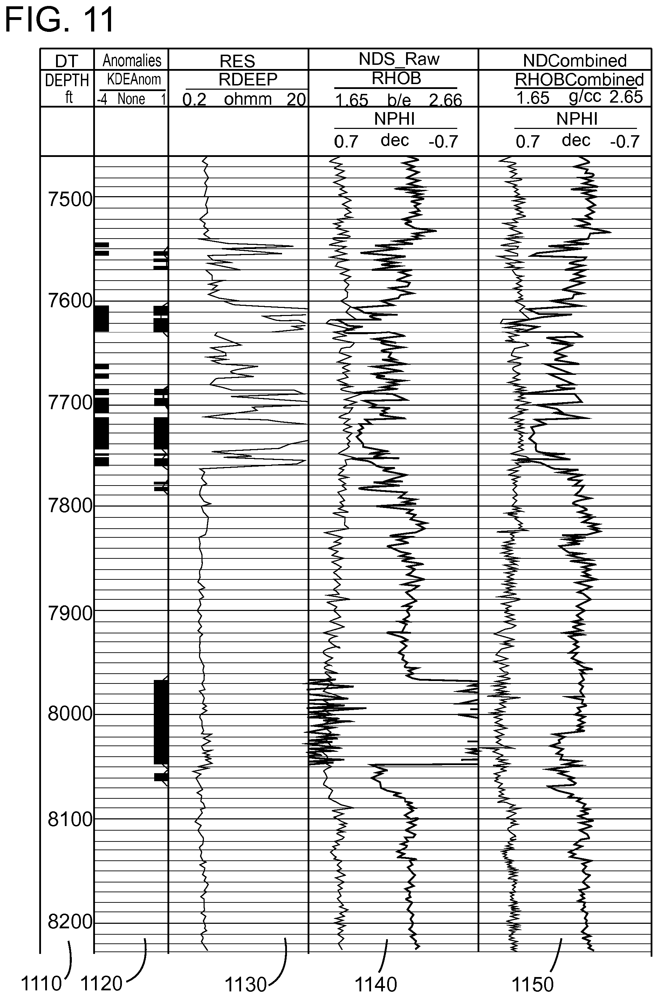

Figure 11 is another log plot with five sections (with one or two tracks per section) illustrating pay-zone-aware corrections. The first track labeled DT represents the depth. The second section shows two flags: the one aligned with left margin is the resistivity outlier flag, and the one aligned with the right margin is the anomaly flag set using the anomaly detection ensemble. The third track is the resistivity curve. In the fourth section, there are two tracks: the lighter one represents uncorrected RHOB (density) curve and the darker one represents a Neutron curve (NPHI). In the fifth section, there are again two tracks: the lighter the synthetic blended density (RHOB_combined) and the Neutron curve (NPHI).

Between 7600 and 7800 ft (1 ft = 30,48 cm) there are a few pay zones indicated by the resistivity flag. Although this region is flagged for correction by the ensemble using the RHOB curve in section five, the pay zones are left untouched because the selective blending preserves the original values in the pay zone by also using the resistivity outliers. Between depths 7975 and 8100 ft, there is a large section of Bad RHOB that is corrected and indicated in section five.

The above-described methods may be used optionally for boreholes that are or are not wells (i.e., used for hydrocarbon production), or alternatively for mixtures of uncompleted boreholes and wells.

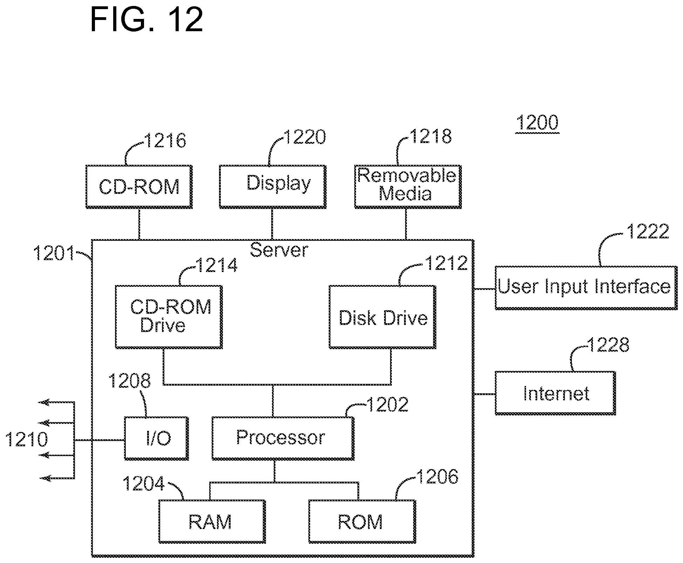

The above-discussed methods may be implemented in a computing device 1200 as illustrated in Figure 12. Hardware, firmware, software or a combination thereof may be used to perform the various steps and operations of methods described herein.

Exemplary computing device 1200 suitable for performing the activities described in the exemplary embodiments described in this section may include a server 1201. Server 1201 may include a central processor (CPU) 1202 coupled to a random access memory (RAM) 1204 and to a read-only memory (ROM) 1206. ROM 1206 may also be other types of storage media to store programs, such as programmable ROM (PROM), erasable PROM (EPROM), etc. Processor 1202 may communicate with other internal and external components through input/output (I/O) circuitry 1208 and bussing 1210 to provide control signals and the like. Processor 1202 carries out a variety of functions as are known in the art, as dictated by software and/or firmware instructions.

Server 1201 may also include one or more data storage devices, including hard drives 1212, CD-ROM drives 1214 and other hardware capable of reading and/or storing information, such as DVD, etc. In one embodiment, software for carrying out the above-discussed steps may be stored and distributed on a CD-ROM or DVD 1216, a USB storage device 1218 or other form of media capable of portably storing information. These storage media may be inserted into, and read by, devices such as CD-ROM drive 1214, disk drive 1212, etc. Server 1201 may be coupled to a display 1220, which may be any type of known display or presentation screen, such as LCD, plasma display, cathode ray tube (CRT), etc. A user input interface 1222 is provided, including one or more user interface mechanisms such as a mouse, keyboard, microphone, touchpad, touch screen, voice-recognition system, etc.

Server 1201 may be coupled to other devices, such as sources, detectors, etc. The server may be part of a larger network configuration as in a global area network (GAN) such as the Internet 1228, which allows ultimate connection to various computing devices.

The above-described approach yields superior results relative to Akkurt's approach because, after outlier detection, the bad hole points are reconstructed and the curve is patched at the outlier depths. When patching the curves, pay zones are not patched in the depth-blending process. Additionally, Akkurt's similarity analysis seems to ignore the outlier points, while embodiments set forth above use the entire curves for similarity analysis. Moreover, some embodiments described above use isolation forest to build the underlying model, not a one-class support vector machine (SVM) as in Akkurt and use hierarchical clustering on similarity scores to group the results. Some embodiments also calculate intersection-over-union similarity score besides Jaccard and overlap similarity scores.

Outlier detection may be performed using the anomaly detection ensemble that consists of isolation forest and DBScan. When optimal minPts for DBScan and contamination for isolation forest are automatically estimated, the best cut-off points for marking outliers are found.

Another difference from Akkurt's approach is that content information on other reservoir characteristics such as lithology and fluid content may be used besides bad hole detection outliers to enhance the analysis. Yet another difference is that the approach set forth in this document does not concentrate on specific curves; that is, any curves could be analyzed and reconstructed. Although the workflows are discussed based on a combination of neutron porosity and density with optionally other logs, the methods are not limited to this combination. Other log combinations can be used.

The blended log values may be used to guide inversions of seismic data, enabling a calibration of properties inverted from seismic data versus the ones measured or calculated from log data, thereby yielding a quantitative mapping of hydrocarbon reservoir properties and their surrounding formations.

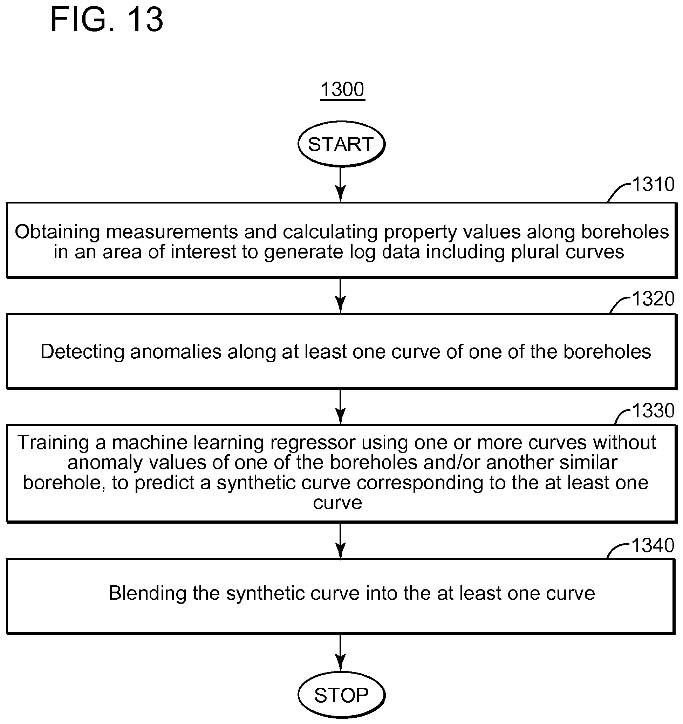

Figure 13 illustrates a geological exploration method 1300 according to an embodiment. Method 1300 includes obtaining measurements and calculating properties along boreholes in an area of interest to generate log data including plural curves at 1310. The measurements may include neutron porosity, density, and hole geometry besides one or more of a shallow and/or deep resistivity, sonic photoelectric, gamma ray and spontaneous potential. The calculated properties may include shale volume, water saturation, porosity, permeability, elasticity, and/or reflectivity coefficient.

The method then includes detecting anomalies along at least one curve of one of the boreholes at 1320. Step 1320 may encompass conformity checks 102, anomaly detection 104 and the associating of a flag value to each depth at 106 from Figure 1.

Method 1300 further includes training a machine learning regressor using one or more curves without anomaly values of the one of the boreholes and/or of another similar borehole among the boreholes, to predict a synthetic curve corresponding to the at least one curve at 1330. This step may encompass the grouping 108, training 110 and predicting 112 also from Figure 1.

Last but not least, method 1300 includes blending the synthetic curve into the at least one curve at 1340. The options described relative to Figure 8 may be used. If the anomalies were flagged, the blending step may include replacing the flagged anomalies with values on the synthetic curve. The blending may use a pay zone flag in addition to an anomaly flag associated to each detected anomaly, the values of the pay zone flag being determined using a resistivity curve's interquartile range cut off.

As already discussed, the anomalies may be detected using an isolation forest technique (with contamination value an empirical value determined by applying IQR to differential caliper measurements, or by applying an elbow-plot variance method to a number of outliers versus contamination value plot), using DBScan (with predetermined eps and minPts parameters or predetermined eps and minPts parameter determined by applying an elbow-plot variance method to a number of outliers versus minPts plot), using an IQR or using an ensemble of methods including at least one of isolation forest, DBScan and IQR.

Further, the corrected log curves may be used in a seismic inversion. That is, an inversion applied to seismic data acquired over the area of interest to generate a three-dimensional (3D) image of an underground formation underneath is calibrated using the blended curves of the measurements and/or properties along one or more of the boreholes in the area of interest. Here, the 3D image should be understood as referring to various models, parameters and properties representing the physical reality of the underground formation. Hydrocarbon extraction may be planned based on reservoir characterization provided by the 3D image. Extracting hydrocarbon (e.g., oil and gas) would then according to the planning.

The seismic data processing benefit from blended well log curves in (1) generation of seismic synthetics and (2) quality check (QC) of seismic inversion results (seismic inversion transforms seismic data from reflection events to layer based properties which more accurately represent subsurface geology). The generation of seismic synthetics can be used to calibrate and check seismic processing workflows by comparing to well logs with seismic synthetics, to validate well logs by comparing to measured seismic, and/or to make decisions for new well locations by searching for seismic in survey area which match desired synthetic intervals. In QC, blended well log curves can be used for fluid replacement modeling, in order to generate synthetic seismic to model different fluid effects, and/or QC of seismic inversion results (seismic inversion transforms seismic data from reflection events to layer based properties which more accurately represent subsurface geology). Comparison of well logs to inverted volumes enables QC of inversion results. Accurate well logs are required to generate the low frequency model, which is a required input of seismic inversion.

Thus, the various embodiments provide better pore pressure predictions due to more accurate overburden stress calculations, better quality facies classification results (both supervised and unsupervised), save time spent on data quality control (as it is automated and more accurate), and yield better quality seismic synthetics. The patentable scope of the subject matter is defined by the claims, and may include other examples that occur to those skilled in the art. Such other examples are intended to be within the scope of the claims.

## Claims

1. A computer implemented method for geological exploration (1300) comprising:
obtaining (1310) acquired measurements and calculating property values associated with depth values along boreholes in an area of interest to generate log data including plural curves;
detecting (1320) anomalies along at least one curve among the plural curves, the at least one curve corresponding to a borehole among of one of the boreholes;
training (1330) a machine learning regressor using one or more curves without anomaly values of the one of the boreholes and/or of another similar borehole among the boreholes, to predict a synthetic curve corresponding to the at least one curve;
blending (1340) the synthetic curve into the at least one curve to obtain a blended curve;
obtaining seismic data for the area of interest; and
applying an inversion method to the seismic data to generate a three-dimensional image of underground formation in the area of interest, the inversion method being calibrated using the blended curve, the three-dimensional image being usable to plan hydrocarbon extraction.

2. The method of claim 1, further comprising:
flagging the anomalies detected along the at least one curve,
wherein the blending includes replacing the flagged anomalies with values on the synthetic curve.

3. The method of claim 1, wherein the anomalies are detected using an ensemble of methods including at least one of an isolation forest method, a density-based spatial clustering method and an interquartile range technique.

4. The method of claim 1, wherein the anomalies are detected using an isolation forest technique.

5. The method of claim 4, wherein a contamination value used by the isolation forest method is determined by applying an interquartile range technique to differential caliper measurements.

6. The method of claim 4, wherein a contamination value used by the isolation forest method is determined by applying an elbow-plot variance method to a number of outliers versus contamination value plot.

7. The method of claim 1, wherein the anomaly detection uses a density-based spatial clustering method (DBScan).

8. The method of claim 7, wherein values of eps and minPts parameters used by DBScan are predetermined.

9. The method of claim 7, wherein a value of eps parameter used by DBScan is predetermined, and a value of minPts parameter used by DBScan is determined by applying an elbow-plot variance method to a number of outliers versus minPts value plot.

10. The method of claim 1, wherein the anomaly detection uses an interquartile range technique.

11. The method of claim 1, wherein the blending uses a pay zone flag in addition to an anomaly flag associated to each detected anomaly, wherein values of the anomaly flag are determined using a resistivity curve's interquartile range cut off, and the pay zone flag is set for lowest gamma ray values or determined using values of a curve other than the at least one curve.

12. The method of claim 1, wherein
the measurements include neutron porosity, density, and hole geometry besides one or more of a shallow and/or deep resistivity, sonic photoelectric, gamma ray and spontaneous potential, and/or
the calculated properties include one or more of shale volume, water saturation, porosity, permeability, elasticity, reflectivity coefficient.

13. The method of claim 1, further comprising:
planning hydrocarbon extraction based on reservoir characterization provided by the three-dimensional image; and
extracting hydrocarbon according to the planning.

14. An underground exploration apparatus (1200) comprising:
an interface (1208) configured to obtain acquired measurements and calculating property values associated with depth values along boreholes in an area of interest to generate log data including plural curves; and to obtain seismic data for the area of interest; and
a data processing module (1201) connected to the interface, including at least one processor and configured
to detect anomalies along at least one curve of one of the boreholes,
to train a machine learning regressor using one or more curves without anomaly values of the one of the boreholes and/or of another similar borehole among the boreholes, to predict a synthetic curve corresponding to the at least one curve, and
to blend the synthetic curve into the at least one curve to obtain a blended curve, and
to apply an inversion method to the seismic data to generate a three-dimensional image of underground formation in the area of interest, wherein the inversion method is calibrated using the blended curve, the three-dimensional image being usable to plan hydrocarbon extraction.

## Patentansprüche

1. Computerimplementiertes Verfahren zur geologischen Exploration (1300), das umfasst:
Erhalten (1310) erfasster Messungen und Berechnen von Eigenschaftswerten, die mit Tiefenwerten entlang von Bohrlöchern in einem interessierenden Bereich assoziiert sind, um Protokolldaten, einschließlich mehrerer Kurven, zu erzeugen;
Detektieren (1320) von Anomalien entlang mindestens einer Kurve unter den mehreren Kurven, wobei die mindestens eine Kurve einem Bohrloch unter einem der Bohrlöcher entspricht;
Trainieren (1330) eines Regressionsmodells des maschinellen Lernens unter Verwendung einer oder mehrerer Kurve(n) ohne Anomaliewerte des einen der Bohrlöcher und/oder eines anderen ähnlichen Bohrlochs unter den Bohrlöchern, um eine synthetische Kurve, die der mindestens einen Kurve entspricht, vorherzusagen;
Mischen (1340) der synthetischen Kurve in die mindestens eine Kurve, um eine gemischte Kurve zu erhalten;
Erhalten seismischer Daten für den interessierenden Bereich und
Anwenden eines Inversionsverfahrens auf die seismischen Daten, um ein dreidimensionales Bild einer unterirdischen Formation im interessierenden Bereich zu erzeugen, wobei das Inversionsverfahren unter Verwendung der gemischten Kurve kalibriert wird, wobei das dreidimensionale Bild zum Planen einer Kohlenwasserstoffextraktion verwendbar ist.

2. Verfahren nach Anspruch 1, das ferner umfasst:
Kennzeichnen der detektierten Anomalien entlang der mindestens einen Kurve,
wobei das Mischen ein Ersetzen der gekennzeichneten Anomalien durch Werte auf der synthetischen Kurve beinhaltet.

3. Verfahren nach Anspruch 1, wobei die Anomalien unter Verwendung eines Ensembles von Verfahren, einschließlich mindestens eines von einem Isolation Forest-Verfahren, einem Verfahren für ein dichtebasiertes räumliches Clustering und einer Interquartilsabstandstechnik, detektiert werden.

4. Verfahren nach Anspruch 1, wobei die Anomalien unter Verwendung einer Isolation Forest-Technik detektiert werden.

5. Verfahren nach Anspruch 4, wobei ein Kontaminationswert, der durch das Isolation Forest-Verfahren verwendet wird, durch Anwenden einer Interquartilsabstandstechnik auf Differenzmessungen mit einem Messschieber bestimmt wird.

6. Verfahren nach Anspruch 4, wobei ein Kontaminationswert, der durch das Isolation Forest-Verfahren verwendet wird, durch Anwenden eines Elbow-Plot-Varianz-Verfahrens auf eine Anzahl von Ausreißern gegenüber einem Kontaminationswertdiagramm bestimmt wird.

7. Verfahren nach Anspruch 1, wobei die Anomaliedetektion ein Verfahren für ein dichtebasiertes räumliches Clustering (DBScan) verwendet.

8. Verfahren nach Anspruch 7, wobei Werte von eps- und minPts-Parametern, die durch DBScan verwendet werden, vorbestimmt werden.

9. Verfahren nach Anspruch 7, wobei ein Wert eines durch DBScan verwendeten eps-Parameters vorbestimmt wird und ein Wert eines durch DBScan verwendeten minPts-Parameters bestimmt wird, indem ein Elbow-Plot-Varianz-Verfahren auf eine Anzahl von Ausreißern gegenüber einem minPts-Wert-Diagramm angewendet wird.

10. Verfahren nach Anspruch 1, wobei die Anomaliedetektion eine Interquartilsabstandstechnik verwendet.

11. Verfahren nach Anspruch 1, wobei das Mischen ein Pay-Zone-Flag zusätzlich zu einem Anomalie-Flag, das mit jeder detektierten Anomalie assoziiert ist, verwendet, wobei Werte des Anomalie-Flags unter Verwendung eines Interquartilsabstandsgrenzwerts einer Widerstandskurve bestimmt werden und das Pay-Zone-Flag für niedrigste Gammastrahlwerte gesetzt oder unter Verwendung von Werten einer anderen Kurve als der mindestens einen Kurve bestimmt wird.

12. Verfahren nach Anspruch 1, wobei
die Messungen Neutronenporosität, Dichte und Lochgeometrie neben einem oder mehreren von einem flachen und/oder tiefen Widerstand, Schallphotoelektrik, Gammastrahl und Spontanpotential beinhalten und/oder
die berechneten Eigenschaften eines oder mehrere von Schiefervolumen, Wassersättigung, Porosität, Permeabilität, Elastizität, Reflektivitätskoeffizient umfassen.

13. Verfahren nach Anspruch 1, das ferner umfasst:
Planen einer Kohlenwasserstoffextraktion basierend auf einer Lagerstättencharakterisierung, die durch das dreidimensionale Bild bereitgestellt wird; und
Extrahieren von Kohlenwasserstoff gemäß dem Planen.

14. Einrichtung für eine unterirdische Exploration (1200), die umfasst:
eine Schnittstelle (1208), die dazu ausgelegt ist, erfasste Messungen zu erhalten und Eigenschaftswerte, die mit Tiefenwerten entlang von Bohrlöchern in einem interessierenden Bereich assoziiert sind, zu berechnen, um Protokolldaten, einschließlich mehrerer Kurven, zu erzeugen; und seismische Daten für den interessierenden Bereich zu erhalten; und
ein Datenverarbeitungsmodul (1201), das mit der Schnittstelle verbunden ist, einschließlich mindestens eines Prozessors und dazu ausgelegt,
Anomalien entlang mindestens einer Kurve eines der Bohrlöcher zu detektieren,
ein Regressionsmodell des maschinellen Lernens unter Verwendung einer oder mehrerer Kurve(n) ohne Anomaliewerte des einen der Bohrlöcher und/oder eines anderen ähnlichen Bohrlochs unter den Bohrlöchern, zu trainieren, um eine synthetische Kurve, die der mindestens einen Kurve entspricht, vorherzusagen;
die synthetische Kurve in die mindestens eine Kurve zu mischen, um eine gemischte Kurve zu erhalten, und
ein Inversionsverfahren auf die seismischen Daten anzuwenden, um ein dreidimensionales Bild einer unterirdischen Formation im interessierenden Bereich zu erzeugen, wobei das Inversionsverfahren unter Verwendung der gemischten Kurve kalibriert wird, wobei das dreidimensionale Bild zum Planen einer Kohlenwasserstoffextraktion verwendbar ist.

## Revendications

1. Procédé mis en œuvre par ordinateur d'exploration géologique (1300) comprenant :
l'obtention (1310) de mesures acquises et le calcul de valeurs de propriété associées à des valeurs de profondeur le long de forages dans une zone d'intérêt afin de générer des données logarithmiques comprenant plusieurs courbes ;
la détection (1320) d'anomalies le long d'au moins une courbe parmi la pluralité de courbes, la ou les courbes correspondant à un forage parmi l'un des forages ;
l'entraînement (1330) d'un régresseur d'apprentissage automatique en utilisant une ou plusieurs courbes sans valeurs d'anomalie de l'un des forages et/ou d'un autre forage similaire parmi les forages, pour prédire une courbe synthétique correspondant à la ou aux courbes ;
le mélange (1340) de la courbe synthétique dans la ou les courbes pour obtenir une courbe de mélange ;
l'obtention de données sismiques pour la zone d'intérêt ; et
l'application d'un procédé d'inversion aux données sismiques pour générer une image tridimensionnelle de la formation souterraine dans la zone d'intérêt, le procédé d'inversion étant étalonné en utilisant la courbe mélangée, l'image tridimensionnelle pouvant être utilisée pour planifier l'extraction d'hydrocarbures.

2. Procédé selon la revendication 1, comprenant en outre :
le marquage des anomalies détectées le long de la ou des courbes,
dans lequel le mélange comprend le remplacement des anomalies marquées par des valeurs sur la courbe synthétique.

3. Procédé selon la revendication 1, dans lequel les anomalies sont détectées en utilisant un ensemble de procédés comprenant au moins l'un d'un procédé de forêt d'isolement, d'un procédé de regroupement spatial basé sur la densité et d'une technique de plage interquartile.

4. Procédé selon la revendication 1, dans lequel les anomalies sont détectées en utilisant une technique de forêt d'isolement.

5. Procédé selon la revendication 4, dans lequel une valeur de contamination utilisée par le procédé de forêt d'isolement est déterminée en appliquant une technique de plage interquartile à des mesures différentielles de calibres.

6. Procédé selon la revendication 4, dans lequel une valeur de contamination utilisée par le procédé de forêt d'isolement est déterminée en appliquant un procédé de variance de tracé coudé à un certain nombre de valeurs aberrantes par rapport à un tracé de valeur de contamination.

7. Procédé selon la revendication 1, dans lequel la détection d'anomalies utilise un procédé de regroupement spatial basé sur la densité (DBScan).

8. Procédé selon la revendication 7, dans lequel les valeurs des paramètres eps et minPts utilisés par DBScan sont prédéterminées.

9. Procédé selon la revendication 7, dans lequel une valeur de paramètre eps utilisée par DBScan est prédéterminée, et une valeur de paramètre minPts utilisée par DBScan est déterminée en appliquant un procédé de variance de tracé coudé à un certain nombre de valeurs aberrantes par rapport à un tracé de valeur minPts.

10. Procédé selon la revendication 1, dans lequel la détection d'anomalie utilise une technique de plage interquartile.

11. Procédé selon la revendication 1, dans lequel le mélange utilise un indicateur de zone de paiement en plus d'un indicateur d'anomalie associé à chaque anomalie détectée, dans lequel les valeurs de l'indicateur d'anomalie sont déterminées en utilisant la coupure de plage interquartile d'une courbe de résistivité, et l'indicateur de zone de paiement est réglé pour les valeurs de rayons gamma les plus faibles ou déterminé en utilisant les valeurs d'une courbe autre que la ou les courbes.

12. Procédé selon la revendication 1, dans lequel
les mesures comprennent la porosité des neutrons, la densité et la géométrie des trous en plus d'un ou plusieurs éléments parmi une résistivité peu profonde et/ou profonde, un potentiel photoélectrique sonique, des rayons gamma et un potentiel spontané, et/ou
les propriétés calculées comprennent un ou plusieurs éléments parmi le volume de schiste, la saturation en eau, la porosité, la perméabilité, l'élasticité et le coefficient de réflectivité.

13. Procédé selon la revendication 1, comprenant en outre :
la planification de l'extraction d'hydrocarbures basée sur la caractérisation du réservoir fournie par l'image tridimensionnelle ; et
l'extraction d'hydrocarbures selon la planification.

14. Équipement d'exploration souterraine (1200) comprenant :
une interface (1208) conçue pour obtenir des mesures acquises et calculer des valeurs de propriété associées à des valeurs de profondeur le long de forages dans une zone d'intérêt afin de générer des données logarithmiques comprenant plusieurs courbes ; et pour obtenir des données sismiques pour la zone d'intérêt ; et
un module de traitement de données (1201) connecté à l'interface, comprenant au moins un processeur et conçu pour :
détecter des anomalies le long d'au moins une courbe de l'un des forages,
entraîner un régresseur d'apprentissage automatique en utilisant une ou plusieurs courbes sans valeurs d'anomalie de l'un des forages et/ou d'un autre forage similaire parmi les forages, prédire une courbe synthétique correspondant à la ou aux courbes, et
mélanger la courbe synthétique dans la ou les courbes pour obtenir une courbe de mélange, et
appliquer un procédé d'inversion aux données sismiques pour générer une image tridimensionnelle d'une formation souterraine dans la zone d'intérêt, le procédé d'inversion étant étalonné en utilisant la courbe mélangée, l'image tridimensionnelle pouvant être utilisée pour planifier l'extraction d'hydrocarbures.
